# EUROPÄISCHE PATENTSCHRIFT

(11) **EP 1 489 324 B1**
(45) Veröffentlichungstag und Bekanntmachung des Hinweises auf die Patenterteilung: **11.10.2006**
(21) Anmeldenummer: 04013298.7
(22) Anmeldetag: 05.06.2004
(51) Int. Cl.: F16D 21/06, F16D 25/10, F16D 25/12, F16D 25/0638

(54) **Kupplungseinrichtung, insbesondere Doppel- oder Mehrfach-Kupplungseinrichtung, und Dichtungskonzept hierfür**
Clutch mechanism, especially double or multiple clutch mechanism and sealing concept therefor
Dispositif d'embrayage, notamment dispositif d'embrayage double ou multiple et concept d'étanchéité

(30) Priorität: 18.06.2003 DE 10327729
(43) Veröffentlichungstag der Anmeldung: 22.12.2004
(73) Patentinhaber: ZF Sachs AG, 97424 Schweinfurt (DE)
(72) Erfinder: Grosspietsch, Wolfgang, 97422 Schweinfurt (DE); Kundermann, Wolfgang, 97422 Schweinfurt (DE); Stampf, Volker, 97422 Schweinfurt (DE)

(56) Entgegenhaltungen:
- DE-A1- 10 111 202
- DE-A1- 10 203 618
- DE-A1- 19 833 377

## Beschreibung

Die Erfindung bezieht sich auf eine Kupplungseinrichtung, welche mittels eines integrierten Druckmediumkraftzylinders betätigbar ist, welchem ein Druckausgleichsraum zugeordnet ist, wobei ein Rückstellelement an einer Dichtungsanordnung des Ausgleichsraumes geführt ist.

Es sind bereits Kupplungseinrichtungen bekannt (z.B. DE 101 11 202 A1), bei denen eine nasslaufende Doppelkupplung beschrieben wurde, welche über zwei radial angeordnete Lamellenkupplungsanordnungen verfügt, die jeweils mittels eines integrierten Druckmediumkraftzylinders betätigbar sind. Diese Zylinder weisen axial verschiebbare Betätigungskolben auf, die gegenüber den Zylindern mittels Dichtungsanordnungen abgedichtet sind, wobei die Dichtungsanordnungen aus Dichtungselementhaltern und aufvulkanisierten Dichtungselementen aufgebaut sind. Die Dichtungselementhalter sind hierbei an den Zylinderwänden angeschweißt. Den Druckmediumkraftzylindern ist jeweils ein Druckausgleichsraum zugeordnet, wobei lediglich der Druckausgleichsraum der radial äußeren Kupplung dieselbe radiale Erstreckung aufweist wie der zugeordnete Druckraum des Druckmediumkraftzylinders. Die Abdichtung des Druckausgleichsraumes erfolgt hier über ein elastisches Dichtungselement, welches auf den Kolben aufvulkanisiert ist. Der Druckausgleichsraum des Druckmediumkraftzylinders, welcher die radial innere Kupplurigsanordnung betätigt, wird gebildet aus dem Betätigungskolben der inneren Kupplungsanordnung und einer Begrenzungswandung welche ein elastisches Dichtungselement aufnimmt, das den Druckausgleichsraum radial abdichtet, wobei das Dichtungselement des Druckausgleichsraumes radial weiter außen angeordnet ist, wie das Dichtungselement, welches den Druckraum abdichtet. Um dennoch unter Rotation die Fliehkräfte des Öls im Druckraum und im Ausgleichsraum im Gleichgewicht zu halten, ist in der Begrenzungswandung eine axiale Kühlölbohrung vorgesehen, welche den unter Fliehkraft wirksamen Radialbereich des Druckausgleichsraumes nach rädial innen begrenzt. Die Rückstellung der Kolben der beiden Lamellenkupplungen erfolgt über Tellerfederanordnungen, wobei die Rückstellung des Kolbens der radial inneren Kupplung über zwei gleichsinnig geschichtete Tellerfedern erfolgt, welche zwischen dem Kolben der radial inneren Kupplung und der Begrenzungswandung des Ausgleichsraumes angeordnet sind. Eine Zentrierung dieser Tellerfedern erfolgt über den radial inneren Umfang der Tellerfedern, da hier die Federzungen auf einem Axialbereich der Begrenzungswändung angeordnet sind.

Nachteilig bei dieser Anordnung der Rückstellfedern der radial inneren -Kupplung ist, dass die Zentrierung der Federanordnung radial innen erfolgt. Tellerfedern, die nach radial innen gerichtete Federzungen aufweisen, verändern beim Einfedern systembedingt ihren Innenradius, während der Außenradius im wesentlichen konstant bleibt. Deswegen muss bei radial innerer Zentrierung der Tellerfedern ein genügend großes Lüftspiel vorgehalten werden, damit beim Einfedern die Federzungen nicht auf ihrem Sitz klemmen. Dies wiederum steht einer exakten Zentrierung der Tellerfedern nachteilig entgegen, da im unbetätigten Zustand der Lamellenkupplung die Tellerfeder radial innen Ihren größten Durchmesser aufweist und somit in diesen Betriebszuständen nur unzureichend zentriert ist. Weiterhin kann ein Druckausgleich des Fliehkraftdrucks des Öls im Kolbenraum der radial inneren Kupplung mit der offenbarten Ausgestaltung des Druckausgleichsraums nicht optimal erfolgen, da die radiale Erstreckung des Ausgleichsraumes nicht der radialen Erstreckung des Druckraumes entspricht.

Hiervon ist es Aufgabe der Erfindung, eine Kupplungseinrichtung derart weiterzubilden, dass eine radiale Führung eines Rückstellelementes verbessert wird.

Zur Lösung dieser Aufgabe ist erfindungsgemäß vorgesehen, dass das Rückstellelement an seinem radialen Außenumfang an einer Dichtungsanordnung geführt ist. Vorteilhaft hierbei ist, dass kein zusätzliches Bauteil angeordnet werden muss, um eine Radialaufnahme des Rückstellelementes zu gewährleisten. Vorzugsweise ist das Rückstellelement des Betätigungskolben innerhalb dem ihm zugeordneten Druckausgleichraum angeordnet und wird radial außen' an der zugehörigen Dichtungsanordnung geführt.

Nach einem wesentlichen Merkmal der Erfindung ist vorgesehen, das Rückstellelement als Tellerfederelementanordnung auszugestalten. Eine vorteilhafte Ausgestaltung der Tellerfederanordnung sieht vor, diese in Abhängigkeit der erforderlichen Rückstellkräfte auszugestalten und eventuell mehrere sich radial erstreckende Tellerfedern gleichsinnig zu schichten. Vorteilhaft hierbei ist, dass bei Verwendung von Tellerfedern der axiale Bereich, welcher zu einer sicheren Radialführung des Rückstellelementes benötigt wird, relativ schmal ist im Vergleich zur Verwendung von sich axial erstreckenden Spiralfedern.

Nach einem weiteren wesentlichen Merkmal der Erfindung ist vorgesehen, die Tellerfederanordnung radial innerhalb eines sich axial erstreckenden Abschnitt eines Dichtungselementhalters anzuordnen. Vorzugsweise ist das zugehörige Dichtungselement auf dem Außenumfang dieses axialen Abschnittes angeordnet, sodass die Tellerfederanordnung direkt an dem vorzugsweise aus metallischem Material ausgestalteten Dichtungselementhalter geführt wird. Vorteilhaft hierbei ist, dass der Dichtungselementhalter zusätzlich die Führung der Tellerfederanordnung übernimmt und damit der Außenradius der Tellerfederanordnung maximiert werden kann. Eine weitere vorteilhafte Ausgestaltung der Erfindung sieht vor, zwischen dem Außenumfang der Tellerfederanordnung und dem Dichtungselementhalters ein separates Bauteil vorzusehen, welches buchsenförmig ausgestaltet ist und einen axialen Führungsabschnitt aufweist, welcher die Tellerfederanordnung zentriert.
Eine erfindungsgemäße Ausgestaltung der Dichtungselementhalter sieht vor, dass diese an der Zylinderwandung und/oder am Betätigungskolben angeschweißt sind, wobei vorzugsweise ein radial ausgebildeter Teil des Dichtungselementhalters, welcher die Radialführung des Rückstellelements übernimmt einen Anlagebereich aufweist, welcher als umlaufender Wulst in axialer Richtung ausgebildet ist und an welchem das Rückstellelement axial anliegt. Vorzugsweise ist das Rückstellelement als Tellerfederanordnung ausgebildet und der Anlagebereich dergestalt ausgebildet, dass bei axialer Verschiebung des Betätigungskolbens ein Einfedern der Tellerfederanordnung in eine Über-Totpunkt-Lage möglich ist, wobei die Tellerfederanordnung lediglich am Anlagebereich des Dichtungselementhalters anliegt. Eine weitere erfindungsgemäße Ausgestaltung des Anlagebereiches sieht vor eine gegenüber dem Dichtungselementhalter separate Anlagescheibe einzubauen, welche ebenfalls durch den axialen Teil des Dichtungselementhalters zentriert wird.
Höchstvorzugsweise ist der Anlagebereich oder/und der den Anlagebereich tragende Dichtungselementhalter oder/und die separate Anlagescheibe aus hartem Stahl ausgebildet oder gehärtet. Vorteilhaft hierbei ist, dass die Tellerfederanordnung welche beim Ein- und Ausfedern radiale Bewegungen im Bereich des Anlagebereiches ausführt sich im Wesentlichen nicht in das in Anlage befindliche Material einarbeitet. Der Material im Anlagebereich kann hierzu zum Beispiel durch Induktionshärten oder Nitrieren gehärtet werden. Höchstvorzugsweise sind sowohl der radial äußere als auch der radial innere Anlagebereich der Tellerfederanordnung gegen ein Einarbeiten der Tellerfederanordnung verschleißfest ausgebildet.

Ein erfindungsgemäßes Ausführungsbeispiel ist in der Figur dargestellt.

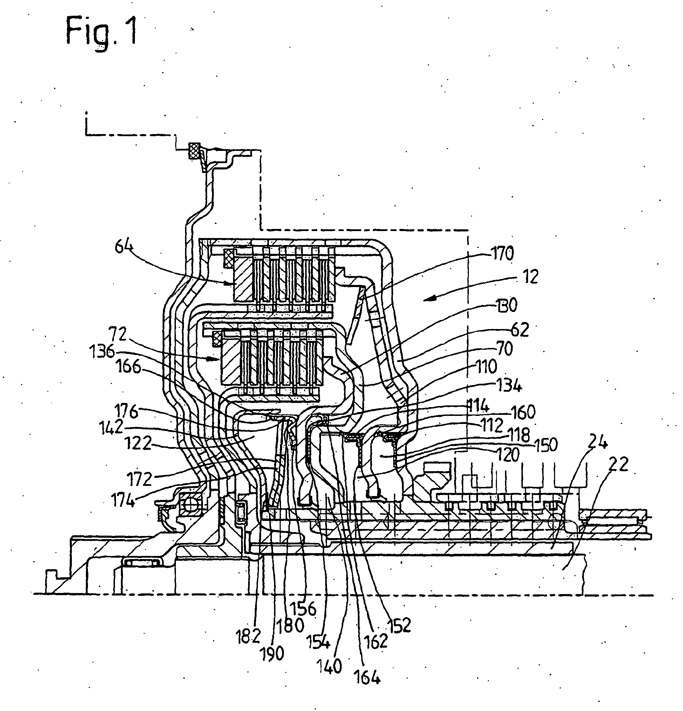

Es zeigt Fig. 1 eine erfindungsgemäße Doppel-Kupplungseinrichtung mit einer bevorzugten Ausgestaltung der Dichtungsanordnungen.

In Fig. 1 ist eine Kupplungseinrichtung 12 dargestellt, welche als Doppelkupplung mit zwei radial angeordneten Kupplungsanordnungen 64, 72 ausgebildet ist. Die beiden Kupplungsanordnungen werden mittels den Betätigungskolben 110, 130 hydraulisch betätigt, wobei über eine nicht dargestellte Hydraulikeinheit Druckmedium, vorzugsweise Hydrauliköl, in die beiden Druckmediumkraftzylinder 118, 140 gefördert wird. Die Druckmediumkraftzylinder 118, 140 sind radial außen über die Dichtungsanordnungen 112, 134 abgedichtet und radial innen über Dichtungen, welche am Innenumfang der'beiden Betätigungskolben 110, 130 anvulkanisiert sind. Die beiden Dichtungsanordnungen 112, 134 bestehen jeweils aus einem Dichtungselementhalter 150, 154 und einem daran anvulkanisiertem Dichtungselement 160, 164. Die Dichtungselementhalter 150, 154 sind jeweils an den Zylinderwandungen 62, 70 angeschweißt. Die Dichtungsanordnung 134 der inneren Kupplung ist auf einem größerem Radius als die Dichtungsanordnung 112 angebracht, sodass trotz kleinerem Durchmesser der inneren Kupplung aufgrund der größeren Kolbenfläche bei gleichem Betätigungsdruck ein im Wesentlichen gleiches Drehmoment übertragen werden kann. Den beiden Druckmediumkraftzylinder 118, 140 sind jeweils ein Druckausgleichsraum 120, 122 zugeordnet, wobei der Druckausgleichsraum 122 der äußeren Kupplungsanordnung 64 aus dem Kolben 110 der Kupplungsanordnung 64 und der Zylinderwandung 70 der inneren Kupplungsanordnung 72 gebildet wird und mittels der Dichtungsanordnung 114 abgedichtet wird. Die Dichtungsanordnung 114 besteht wiederum aus einem Dichtungselementhalter 152 und einem Dichtungselement 162, wobei der Dichtungselementhalter 152 am Betätigungskolben 110 angeschweißt ist. Das Dichtungselement 162 ist an einem axialen Abschnitt des Dichtungselementhalters 152 aufvulkanisiert und durch diesen in radialer Richtung versteift, sodass bei hohen Drehzahlen und dem daraus resultierendem Fliehkraftdruck das Dichtungselement 162 nicht nach radial außen umklappen kann. Ein weiterer Vorteil dieser Ausgestaltung der Dichtungsanordnung 114 besteht darin, dass relativ große Verfahrwege des Betätigungskolbens 110 realisiert werden können. Der Verfahrweg des Kolbens ist proportional zur Anzahl der Lamellen eines Lamellenpaketes und deswegen musste bisher die Kolbengeometrie dem anzustrebenden Verfahrweg angepasst werden. Die erfindungsgemäße Ausgestaltung der Dichtungsanordnung erlaubt es nunmehr durch gezielte Ausgestaltung den Verfahrweg des Kolbens zu optimieren, sodass baugleiche Kolben in verschiedenen Kupplungen mit verschiedener Anzahl von Lamellen eingesetzt werden können. Der Druckausgleichsraum 122 der inneren Kupplungsanordnung 72 wird aus dem Betätigungskolben 130 und der Begrenzungswandung 142 gebildet, wobei die Dichtungsanordnung 136 den Druckausgleichsraum 122 nach radial außen hin abdichtet. Die Dichtungsanordnung 136 wird vom Dichtungselement 166 und dem Dichtungselementhalter 156, gebildet, wobei der Dichtungselementhalter 156 am Betätigungskolben 130 angeschweißt ist. Der Kolben 130 wird durch das Rückstellelement 172 welches als Tellerfederanordnung 174 mit zwei gleichsinnig geschichteten Tellerfedern ausgebildet ist, zurück in seine Ausgangslage gedrückt. Die beiden Tellerfedern drücken hierzu radial außen axial gegen den Dichtungselementhalter 156. Der Anlagebereich 180 des Dichtungselementhalter 156 ist hierzu wulstartig ausgebildet, sodass der Anlagebereich 180 axial etwas distanziert vom Betätigungskolben 130 ausgebildet ist, sodass bei Verfahren des Kolbens der Anlagebereich 180 im Wesentlichen konstant bleibt und ein Einfedern der beiden Tellerfedern in eine sogenannte Über-Totpunktlage ermöglicht werden kann. Vorzugsweise ist der Anlagebereich 180 hart ausgebildet um einen Verschleiß entgegenzuwirken. Hierzu kann entweder der komplette Dichtungselementhalter 156 aus verschleißfestem Stahl ausgebildet sein oder nur der Anlagebereich 180 gehärtet sein. Ein separates Härten des Betätigungskolbens 130 im Anlagebereich des Rückstellelementes ist somit nicht mehr erforderlich. Radial innen stützt sich die Tellerfederanordnung 174 mittels der Anlagescheibe 190, welche als Verschleißschutz dient, an der Begrenzungswandung 142 ab. Alternativ kann anstelle der Anlagescheibe die Begrenzungswandung in diesem Bereich verschleißfest, zum Beispiel durch Härten, ausgestaltet werden. Weiterhin dient die Dichtungsanordnung 136 als Zentrierung der Tellerfederanordnung 174. Hierzu greift ein axialer Abschnitt 176 des Dichtungselementhalters 156, radial über den Außenumfang der beiden Tellerfedern, wodurch diese in ihrer radialen Position gehalten werden. Der Dichtungselementhalter 156 ist dazu nur an seiner radialen Außenseite mit dem Dichtungselement 166 versehen. Weiterhin ermöglicht die Anordnung der Dichtungsanordnung 136 am Betätigungskolben 130 eine Anordnung des Druckausgleichraumes 122 der inneren Kupplungsanordnung 72 auf gleichem radialem Durchmesser wie der Druckmediumkraftzylinder 140, wodurch keine die Ölsäule begrenzende Bohrung in der Begrenzungswandung 142 mehr benötigt wird, welche bei Vollfüllung der Kupplungseinrichtung 12 mit Kühlöl eine Überkompensation der Fliehkraft zur Folge hat.
Betreffend weitere Einzelheiten und vorteilhafte Ausgestaltungen der Doppelkupplung 12 wird auf die deutschen Patentanmeldungen 101 11 202A1 A1 und 101 24 213 verwiesen, deren Offenbarung in den Offenbarungsgehalt der vorliegenden Anmeldung einbezogen wird:

### Bezugszeichenliste

- 12.: Kupplungseinrichtung
- 22.: innere Getriebeeingängswelle
- 24.: äußere Getriebeeingangswelle
- 62.: Zylinderwandung K1
- 64.: äußere Kupplungsanordnung
- 70.: Zylinderwandung K2
- 72.: innere Kupplungsanordnung
- 110.: Betätigungskolben K1
- 112.: Dichtungsanordnung DK1
- 114.: Dichtungsanordnung AK1
- 118.: Druckmediumkraftzylinder DK1
- 120.: Druckausgleichsraum K1
- 122.: Druckausgleichsraum K2
- 130.: Betätigungskolben K2
- 134.: Dichtungsanordnung DK2
- 136.: Dichtungsanordnung AK2
- 140.: Druckmediumkraftzylinder DK2
- 142.: Begrenzungswandung
- 150.: Dichtungselementhalter
- 152.: Dichtungselementhalter
- 154.: Dichtungselementhalter
- 156.: Dichtungselementhalter
- 160.: Dichtungselement
- 162.: Dichtungselement
- 164.: Dichtungselement
- 166.: Dichtungselement
- 170.: Rückstellelement K1
- 172.: Rückstellelement K2
- 174.: Tellerfederanordnung
- 176.: axialer Abschnitt
- 180.: Anlagebereich
- 182.: innerer Anlagebereich
- 190.: Anlagescheibe

## Patentansprüche

1. Kupplungseinrichtung, gegebenenfalls Doppel- oder Mehrfach-Kupplungseinrichtung, für die Anordnung in einem Antriebsstrang eines Kraftfahrzeugs zwischen einer Antriebseinheit und einem Getriebe, wobei die Kupplungseinrichtung(12) wenigstens eine einer (jeweiligen)Getriebeeingangswelle (22 bzw. 24) des Getriebes zugeordnete Kupplungsanordnung (64, 72) aufweist zur Momentenübertragung zwischen der Antriebseinheit und dem Getriebe, wobei die (jeweilige) Kupplungsanordnung vermittels wenigstens eines integrierten Druckmediumkraftzylinders (118 bzw. 140) betätigbar ist, der einen an einer Zylinderwandung (62 bzw. 70) verschiebbar geführten Betätigungskolben (110 bzw. 130) aufweist, der unter Vermittlung einer an der Zylinderwandung oder/und am Betätigungskolben angeordneten Dichtungsanordnung (112 bzw. 134) mit der Zylinderwandung im Dichtungseingriff steht und dem jeweils ein vom Betätigungskolben (110 bzw. 130) und einer Begrenzungswandung (140, 142) gebildeter Druckausgleichsraum (120, 122) zugeordnet ist, der vermittels einer an der Begrenzungswandung oder/und am Kolben angeordneten Dichtungsanordnung (114 bzw. 136) abgedichtet ist, wobei mindestens eine Dichtungsanordnung (112, 114, 134, 136) wenigstens einen gegenüber der Zylinderwandung (62, 70) oder der Begrenzungswandung (140, 142) oder dem Kolben (110, 130) gesonderten Dichtungselementhalter (150, 152, 154, 156) und wenigstens ein Dichtungselement (160, 162, 164, 166) aufweist
**dadurch gekennzeichnet,**
**dass** mindestens ein Rückstellelement (170 bzw. 172) eines Betätigungskolbens (110 bzw. 130), welches den Betätigungskolben bei Nichtbetätigung in seine Ausgangslage zurückführt, an seinem radialen Außenumfang an einer der Dichtungsanordnungen (112, 114, 134, bzw. 136) geführt ist.

2. Kupplungseinrichtung nach Anspruch 1, **dadurch gekennzeichnet, dass** das mindestens eine Rückstellelement (170 bzw. 172) als Tellerfederanordnung (174) ausgebildet ist.

3. Kupplungseinrichtung nach Anspruch 1, **dadurch gekennzeichnet, dass** die Tellerfederanordnung (174) radial innerhalb eines sich axial erstreckenden Abschnitt (176) eines Dichtungselementhalters (156) angeordnet ist.

4. Kupplungseinrichtung nach Anspruch 3, **dadurch gekennzeichnet, dass** die Tellerfederanordnung (174) durch den axialen Abschnitt (176) des Dichtungselementhalters (156) der Dichtungsanordnung (136) radial gesichert wird.

5. Kupplungseinrichtung nach Anspruch 3, **dadurch gekennzeichnet, dass** die Tellerfederanordnung (174) vermittels des Dichtungselementhalters (156) zentriert wird.

6. Kupplurigseinrichtung nach Anspruch 1, **dadurch gekennzeichnet, dass** die Dichtungselementhalter (150, 152, 154, 156) an der Zylinderwandung (62, 70) oder/und am Betätigungskolben (110, 130) angeschweißt sind und mindestens das Rückstellelement (172) des Betätigungskolbens (130) einer inneren Kupplungsanordnung (72) axial an einem Anlagebereich des Dichtungselementhalters (156) anliegt.

7. Kupplungseinrichtung nach Anspruch 6, **dadurch gekennzeichnet, dass** der Anlagebereich (180) des Dichtungselementhalters (156) oder/und der Dichtungselementhalter (156) verschleißfest ausgebildet ist.

8. Kupplungseinrichtung nach Anspruch 2, **dadurch gekennzeichnet, dass** ein radial innerer Anlagebereich (182) der Tellerfederanordnung (174) verschleißfest ausgebildet ist.

9. Kupplungseinrichtung nach Anspruch 8, **dadurch gekennzeichnet, dass** der innerer Anlagebereich (182) der Tellerfederanordnung (174) von der Begrenzungswandung (142) oder von einer Anlagescheibe (190), welche zwischen der Tellerfederanordnung (174) und der Begrenzungswandung (142) angeordnet ist, gebildet wird.

10. Kupplungseinrichtung nach Anspruch 1, **dadurch gekennzeichnet, dass** die Kupplungseinrichtung (12) als Doppelkupplungseinrichtung mit zwei radial angeordneten Kupplungsanordnungen (64, 72) ausgebildet ist, die zwei Druckmediumkraftzylinder (118, 140) mit jeweils einem zugeordnetem Druckausgleichsraum (120, 122) aufweist, wobei die beiden die Druckausgleichsräume (120, 122) abdichtenden Dichtungsanordnungen (114, 136) mittels ihrer Dichtungselementhalter (156, 152) am jeweiligen Betätigungskolben (110, 130) befestigt sind und die zugehörigen Dichtungselemente (166, 162) der Druckausgleichsräume (120, 122) im Wesentlichen auf gleichem Radius angeordnet sind wie die jeweilig zugeordneten Dichtungselemente (160, 164) der Dichtungsanordnungen (112, 134) der.beiden zugeordneten Druckmediumkraftzylinder (118, 140).

## Claims

1. Clutch mechanism, especially a double or multiple clutch mechanism, for arrangement in a drivetrain of a motor vehicle between a power unit and a transmission, the clutch mechanism, (12) having at least one clutch arrangement (64, 73) assigned to one (or each) transmission input shaft (22, 24) of the transmission for transmitting torque between the power unit and the transmission, the (respective) clutch arrangement being actuated by means of at least one integral hydraulic cylinder (118, 140), which has an operating piston (110, 130), which is displaceably guided on a cylinder wall (62, 70) and by way of a sealing arrangement (112, 134) arranged on the cylinder wall or/and on the operating piston is in sealing engagement with the cylinder wall, and with which piston a pressure equalizing chamber (120, 122) formed by the operating piston (110, 130) and a boundary wall (140, 142) is in each case associated, the chamber being sealed off by a sealing arrangement (144, 136) arranged on the boundary wall or/and on the piston, at least one sealing arrangement (112, 114, 134, 136) having at least one sealing element holder (150, 152, 154, 156), separate from the cylinder wall (62, 70) or the boundary wall (140, 142) or the piston (110, 130), and at least one sealing element (160, 162, 164, 166), **characterized in that** at least one resetting element (170, 172) of an operating piston (110, 130), which returns the operating piston into its starting position in the event of non-actuation, is guided at its radial outer circumference on one of the sealing arrangements (112, 114, 134, 136).

2. Clutch mechanism according to Claim 1, **characterized in that** at least one resetting element (170, 172) takes the form of a disc spring arrangement (174).

3. Clutch mechanism according to Claim 1, **characterized in that** the disc spring arrangement (174) is arranged radially inside an axially extending section (176) of a sealing element holder (156).

4. Clutch mechanism according to Claim 3, **characterized in that** the disc spring arrangement (174) is secured radially by the axial section (176) of the sealing element holder (156) of the sealing arrangement (136).

5. Clutch mechanism according to Claim 3, **characterized in that** the disc spring arrangement (174) is centred by means of the sealing element holder (156).

6. Clutch mechanism according to Claim 1, **characterized in that** the sealing element holders (150, 152, 154, 156) are welded to the cylinder wall (62, 70) or/and to the operating piston (110, 130) and at least the resetting element (172) of the operating piston (130) of an inner clutch arrangement (72) bears axially against a seating area of the sealing element holder (156).

7. Clutch mechanism according to Claim 6, **characterized in that** the seating area (180) of the sealing element holder (156) or/and of the sealing element holders (156) is wear-resistant.

8. Clutch mechanism according to Claim 2, **characterized in that** a radially inner seating area (182) of the disc spring arrangement (174) is wear-resistant.

9. Clutch mechanism according to Claim 8, **characterized in that** the inner seating area (182) of the disc spring arrangement (174) is formed by the boundary wall (142) or by a seating disc (190), which is arranged between the disc spring arrangement (174) and the boundary wall (142).

10. Clutch mechanism according to Claim 1, **characterized in that** the clutch device (12) takes the form of a double clutch mechanism with two radial clutch arrangements (64, 72), which has two hydraulic cylinders (118, 140) each with a pressure equalizing chamber (120, 122) associated therewith, the two sealing arrangements (114, 136) sealing off the pressure equalizing chambers (120, 122) being fixed by their sealing element holders (156, 152) to the respective operating piston (110, 130) and the associated sealing elements (166, 162) of the pressure equalizing chambers (120, 122) being arranged substantially on the same radius as the respectively associated sealing elements (160, 164) of the sealing arrangements (112, 134) of the two associated hydraulic cylinders (118, 140).

## Revendications

1. Dispositif d'embrayage, éventuellement dispositif d'embrayage double ou multiple, destiné à être placé dans une transmission d'un véhicule automobile entre une unité d'entraînement et une boîte de vitesses, le dispositif d'embrayage (12) présentant au moins un agencement d'embrayage (64, 72) associé à un arbre d'entrée de boîte de vitesses (22, respectivement 24) (respectif) de la boîte de vitesses, pour le transfert de couple entre l'unité d'entraînement et la boîte de vitesses, l'agencement d'embrayage (respectif) pouvant être actionné au moyen d'au moins un vérin à fluide sous pression intégré (118, respectivement 140), qui présente un piston d'actionnement (110, respectivement 130) guidé de manière coulissante contre une paroi du vérin (62, respectivement 70), qui est en engagement étanche par l'intermédiaire d'un agencement d'étanchéité (112, respectivement 134) disposé sur la paroi du vérin et/ou sur le piston d'actionnement, avec la paroi du vérin et auquel est associé un espace de compensation de pression (120, 122) formé par le piston d'actionnement (110, respectivement 130) et une paroi de limitation (140, 142), lequel est étanchéifié au moyen d'un agencement d'étanchéité (114, respectivement 136) disposé sur la paroi de limitation et/ou sur le piston, au moins un agencement d'étanchéité (112, 114, 134, 136) présentant au moins un dispositif de support d'élément d'étanchéité (150, 152, 154, 156) séparé par rapport à la paroi du vérin (62, 70) ou à la paroi de limitation (140, 142) ou au piston (110, 130), et au moins un élément d'étanchéité (160, 162, 164, 166),
**caractérisé en ce que**
au moins un élément de rappel (170, respectivement 172) d'un piston d'actionnement (110, respectivement 130), qui ramène le piston d'actionnement dans sa position de départ lorsqu'il n'est pas actionné, est guidé sur sa périphérie radiale extérieure contre l'un des agencements d'étanchéité (112, 114, 134, respectivement 136).

2. Dispositif d'embrayage selon la revendication 1, **caractérisé en ce que** l'au moins un élément de rappel (170, respectivement 172) est réalisé sous la forme d'un agencement de ressort Belleville (174).

3. Dispositif d'embrayage selon la revendication 1, **caractérisé en ce que** l'agencement de ressort Belleville (174) est disposé radialement à l'intérieur d'une portion s'étendant axialement (176) d'un dispositif de support d'élément d'étanchéité (156).

4. Dispositif d'embrayage selon la revendication 3, **caractérisé en ce que** l'agencement de ressort Belleville (174) est fixé radialement par la portion axiale (176) du dispositif de support d'élément d'étanchéité (176) de l'agencement d'étanchéité (136).

5. Dispositif d'embrayage selon la revendication 3, **caractérisé en ce que** l'agencement de ressort Belleville (174) est centré au moyen du dispositif de support d'élément d'étanchéité (156).

6. Dispositif d'embrayage selon la revendication 1, **caractérisé en ce que** le dispositif de support d'élément d'étanchéité (150, 152, 154, 156) est soudé à la paroi du vérin (62, 70) et/ou au piston d'actionnement (110, 130) et au moins l'élément de rappel (172) du piston d'actionnement (130) d'un agencement d'embrayage interne (72) s'applique axialement contre une zone d'appui du dispositif de support d'élément d'étanchéité (156).

7. Dispositif d'embrayage selon la revendication 6, **caractérisé en ce que** la zone d'appui (180) du dispositif de support d'élément d'étanchéité (156) et/ou le dispositif de support d'élément d'étanchéité (156) sont réalisés de manière résistant à l'usure.

8. Dispositif d'embrayage selon la revendication 2, **caractérisé en ce qu'**une zone d'appui radialement interne (182) de l'agencement de ressort Belleville (174) est réalisée de manière résistant à l'usure.

9. Dispositif d'embrayage selon la revendication 8, **caractérisé en ce que** la zone d'appui interne (182) de l'agencement de ressort Belleville (174) est formée par la paroi de limitation (142) ou par une rondelle d'appui (190) qui est disposée entre l'agencement de ressort Belleville (174) et la paroi de limitation (142).

10. Dispositif d'embrayage selon la revendication 1, **caractérisé en ce que** le dispositif d'embrayage (12) est réalisé sous la forme d'un dispositif d'embrayage double avec deux agencements d'embrayage disposés radialement (64, 72), qui présentent deux vérins de fluide sous pression (118, 140) avec un espace de compensation de la pression respectif associé (120, 122), les deux agencements d'étanchéité (114, 136) réalisant l'étanchéité des espaces de compensation de la pression (120, 122) étant fixés au moyen de leur dispositif de support d'élément d'étanchéité (156, 152) sur le piston d'actionnement respectif (110, 130) et les éléments d'étanchéité associés (166, 162) des espaces de compensation de la pression (120, 122) étant disposés substantiellement sur le même rayon que les éléments d'étanchéité respectifs associés (160, 164) des agencements d'étanchéité (112, 134) des deux vérins de fluide sous pression associés (118, 140).
